# EUROPEAN PATENT APPLICATION

(11) **EP 1 394 656 A2**
(43) Date of publication of application: **03.03.2004**
(21) Application number: 03254798.6
(22) Date of filing: 31.07.2003
(51) Int. Cl.: G06F 1/00

(54) **Data management system, method of providing access to a database and security structure**

(30) Priority: 02.09.2002 GB 0220359
(71) Applicant: SONY UNITED KINGDOM LIMITED, Weybridge KT13 0XW (GB)
(72) Inventor: Heath, John William, Riseley, Berkshire RG7 1QD (GB); Walker, Andrew, Winchester, Hampshire SO22 5BQ (GB)
(74) Representative: Smith, Samuel Leonard

(57) **Abstract**

A data management system including a database for storing a plurality of data libraries, an interface for controlling storage of data in the data libraries of said database and allowing access to said data by a plurality of external organisations, each organisation including one or more respective members, wherein the interface includes a security structure controlling access of the members of the organisations to the data.

## Description

The present invention relates to a data management system, a method of providing organisations with access to a common database as part of that system and a security structure for implementing the system and method.

Within the computer system of a single organisation, it is well known to provide a central database, for instance on a server, accessible to members of that organisation. Security structures are well known for controlling access of the members to various data files within the database. In particular, data files may be owned by respective members, giving those members particular rights over the data files. Similarly, permissions may be granted with respect to respective data files allowing members to be defined for those permissions to carry out functions as defined in those permissions, for instance, read, write, edit etc. Other functions, for instance controlling user ID and user passwords, may be restricted to particular members having administrative rights. These members may have complete freedom to access or change any part of the database.

From WO 01/77863, it is known to provide an external database of multimedia material accessible by a number of different organisations. Any organisation authorised to use the database may view all of the multimedia material and, according to procedural rules built into the system, obtain copies of requested multimedia material where authorised.

The present invention is based on a recognition of the need to provide an external database for storing, for instance, multimedia material whereby different parties may use and work on the same data. The present invention also recognises the problem of providing data owned by different organisations on the same database. In particular, it may be that some organisations will not wish other organisations to view their data or even know that their data is on the database or know that they use the database.

It will be appreciated that systems previously used internally for respective organisations would be inappropriate, since, even where some members are denied permission to view certain files, those members may still see that the files exist. Indeed, more seriously, members with administrative rights are always able to view any files.

It is an object of the present invention to avoid or at least reduce these problems.

According to the present invention, there is provided a data management system, such as a media management system, including:
a database for storing a plurality of data libraries; and
an interface for controlling storage of data in the data libraries of the database and allowing access to the data by a plurality of external organisations, each organisation including one or more respective members; wherein
the interface includes a security structure controlling access of the members of the organisations to the data.

According to the present invention there is also provided a method of providing a plurality of external organisations with access to a common database containing a plurality of data libraries, each organisation including one or more respective members, the method including the steps of a security structure for controlling access of members of the organisations to the data libraries.

According to the present invention, there is also provided a security structure for use with a database storing a plurality of data libraries, the security structure allowing an interface between different external organisations and data of the data libraries, each organisation having one or more respective members, the security structure controlling access of the members of different organisations to the data of the data libraries.

In this way, irrespective of the rights of the various members within their respective organisations, the security structure allows a plurality of different external organisations to use the same database, but controls access of all of the members. By providing a security structure in this way, it is possible to provide a common database which allows different organisations and their members to work jointly on the data of particular data files whilst other organisations may not have sufficient access to know that those data files exist or to know that the organisations are even working on the database. Even where the members of more than one organisation have access to the same data, by virtue of using the security structure, some members may be allowed a lower level of operation, for instance, view only, compared to other members.

It is proposed that usually the organisations will operate respective data storage/communication systems and include an external connection to the database.

Thus, the security structure allows an interface between the systems of different organisations with a common database. The data on the database, under the control of the security structure, may be accessed and manipulated by a plurality of different organisation systems.

The data storage/communication systems may include respective administrator rights for the respective systems.

By virtue of the security structure, the rights of each member of all of the organisations are determined independently of the respective data storage/communication systems. Hence, a member of one organisation need not have any rights over the data of a data library owned by a different organisation.

Preferably, access of the members to the data includes at least reading, writing and editing of the data.

Thus, for each member, the security structure can control reading, writing and editing of data from particular data libraries. It is also possible for the security structure to control other features of access, including functions not directly involving manipulation of the data of the data libraries.

Preferably, the data libraries have different respective ownerships.

The security structure can control access of members to data according to the ownership of the data libraries in which the data is found.

One or more of the data libraries may be owned by different respective organisations.

Thus, each organisation may have its own data library storing a number of different data files. While members of the organisation owning a particular data library may have full access to that data library, the security structure may prevent members of other organisations from operating particular functions on the data of that data library. In particular, the security structure could prevent members of other organisations ever being granted permission to delete files of the data library.

Preferably, the security structure allows the members to request operation of functions with respect to the database, the functions including access to the data.

Hence, a member may request particular data to be written, read or edited. Also, a member may request other functions, such as a change in password for the database.

Preferably, when a member of one of the organisations requests a function, the security structure requires that the ID of the member be authenticated.

In this way, when access is attempted to the database, the security structure denies such access unless it is by a member for which the ID can be authenticated.

Preferably, the security structure includes a list of functions available to respective members of the organisations and, when a member of one of the organisations requests a function, the security structure requires that it be determined that the requested function is available to the member.

In this way, different members may be granted different levels of functionality on the system. In particular, the security structure may allow a particular member only to read data such that, irrespective of what permissions might be granted to that member for particular data, the member can still only read that data. In this way, a member of one organisation cannot grant permission to the member of another organisation beyond what has been predetermined as allowable for that member or members of that organisation.

Preferably, the security structure includes, for each organisation, one or more roles, each role relating to one or more functions and defining the members of the organisation entitled to operate the one or more functions of the role.

In this way, the functions available to a member are defined. When a member is defined as part of a role, it is entitled (in general at least) to operate the functions defined for that role.

This provides a relatively straight forward way of defining a variety of functions for particular members. It also allows the security structure to be operated in a relatively straight forward and convenient manner. In particular, rather than defining an arbitrary selection of different functions to individual members (so that it is difficult to keep track of what functions are available to what members), the predetermined roles define a whole set of functions so that members are given one or more of the sets by means of being part of the respective roles.

Preferably, the security structure includes one or more templates, each template providing a list of one or more functions and the roles having pointers to the templates so as to indicate the one or more functions available to the members defined for the role.

Whereas the roles may relate to respective organisations, the templates may be set up for use by any organisation. In this way, different organisations may have roles of the same name but which refer to different templates. Thus, for instance, an organisation with ownership of a data library might include a role called "user" referring to a template providing full read, write and edit functions, whereas an associated organisation may have a role also called "user" which refers to a template having only read and copy functionality.

Preferably, the security structure includes, for each respective organisation, an indication of all others of the organisations to which said respective organisation is visible and, when a member of one of the organisations requests a function, the security structure requires that it be determined that the function does not require access to data of a data library owned by an organisation which is not visible to the organisation of the member.

In this way, organisations using the database are only visible to other organisations which have been specifically recorded as such in the security structure. Thus, irrespective of any other rights, a member of an organisation cannot access, view or make use of any data owned by an organisation which is not visible to it. Indeed, in this respect, members of one organisation will not know of the existence of another organisation using the database unless they are specifically listed by the other organisation allowing visibility.

Preferably, the security structure provides for each target of a function to have associated with it one or more permissions, the permissions allowing defined functions to be operated by defined members and, when a member of one of the organisations requests a function, the security structure requires that it be determined that the requested function and the member be included in the permissions of the target of the function.

In this way, irrespective of the rights of the member making the request, the security structure provides a mechanism to ensure that the function itself is enabled for that member. Thus, a request to change the password for a member would only be allowed by the security structure if the request was made by the member in question or by the member having administrative rights for the appropriate organisation. It would not be allowed necessarily for a member of another organisation having administrative rights for that other organisation.

Preferably the security structure provides for each function to allow multiple targets. The final authorisation of this function will depend upon the evaluation of optional business logic (for the purposes of authorisation) which can be associated with each function. This enables the system to allow complex operations upon a plurality of targets spanning (potentially) a plurality of organisations.

Preferably, data files of the data libraries have associated permissions, the permissions allowing defined functions to be operated on respective data files by defined members and, when a member of one of the organisations requests a function on a data file, the security structure requires that it be determined that the requested function and the member are included in the permissions of the data file.

In this way, even if a particular member does have the rights to conduct a particular function, for instance deletion, the security structure will not allow this function to occur unless the data file itself includes a permission for that member to conduct that function.

According to the present invention, there may also be provided a computer program comprising program code means for performing all the steps of the security structure when the program is run on a computer.

According to the present invention, there is also provided a computer program product comprising program code means stored on a computer readable medium for performing the steps of the security structure when the program product is run on a computer.

The invention will be more clearly understood from the following description, given by way of example only, with reference to the accompanying drawings, in which:
Figure 1 illustrates an arrangement embodying the present invention;
Figure 2 illustrates user/application server interaction;
Figures 3 to 6 illustrate the directory structure of the security structure;
Figure 7 illustrates the relationships of groups, users/members, roles and templates;
Figures 8 to 10 illustrate the security structure check flow;
Figure 11 illustrates actors of the system;
Figure 12 illustrates a security structure overview; and
Figure 13 illustrates a flow diagram for a user changing a password.

The present application proposes a Media Management System (MMS) designed to allow multiple companies or organisations to collaborate in the management and workflow of digital media. For example, MMS allows two companies working on the same advertising campaign to share and work on the digital media (eg/ video and images). The MMS makes use of a common database in which the data is divided into data libraries such that the database is divided into various sections. Typically, at least some of the organisations using the MMS will have ownership of respective data libraries.

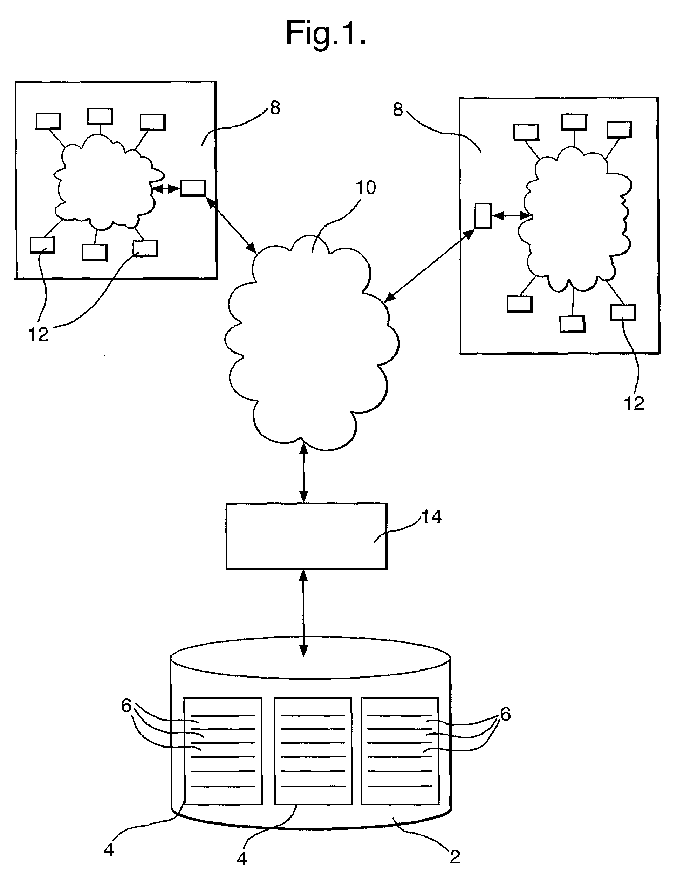

As illustrated in Figure 1, a database 2 is provided for storing data. This data is arranged in data libraries 4 which may be subdivided into data files 6. A plurality of organisations 8 may access the database 2 by means of an external network 10 such as the internet or World Wide Web. Each organisation may include one or more members 12 which may themselves be linked by a network as part of the respective organisations own internal system.

The external organisations 8 interface with the database 2 by means of a security structure 14. As will become clear below, the security structure 14 includes a store of information relating to the organisations 8, members 12, data libraries 4 and data files 6 governing what access is allowed by which members. It also implements procedures for conducting checks on the allowable access when a member 12 requests any function with respect to the data base 2.

The security structure 14 may form an integral part of the physical interface or database. However, it is proposed that it be implemented in software and used to control otherwise conventional hardware.

Security, within the scope of MMS, can be thought of as consisting of two main sections. These sections are System Security and Application Security.

System security is the description of the aspects of the system pertaining to the components which make up the MMS architecture and how they are secured individually and as a whole. System security defines the following things for each component
- The paths of access to each component (such as data file 6), which is how the component will be accessed within the system. For a database server this would describe which components could connect to the server and perform SQL operations. This is important so as to understand the network paths that can (under normal operation) be taken to a component.
- The identity of the entity (such as member 12) accessing the component. In the case of web applications, the application server serves as a proxy to back end components within the system. This means that the back end component is unlikely to know anything other than the fact that it is being accessed by the application server and be unaware of the identity of the user. This puts a greater requirement on the applications running within the application server to ensure that it only performs operations that the user is allowed to.
- The method for propagating authentication credentials within the scope of the MMS system. This includes how to get userids/passwords to users of the system (ie members 12 of the organisations 8) as well as moving and storing the credentials required by the application server in order for it to be able to access back end services.
- The backup and restore procedures for each component within the system. This is required so that a component can be reliably restored to a previous valid state if it becomes compromised.
- The last focus of system security is to understand the mechanisms for testing and verifying the policies which have been written for each component.

The components which need to have system security defined for them are the Directory Server, the Web Sever, the Database, the UNIX systems, the FTP servers, the Application Servers, the Asset Storage and the Network.

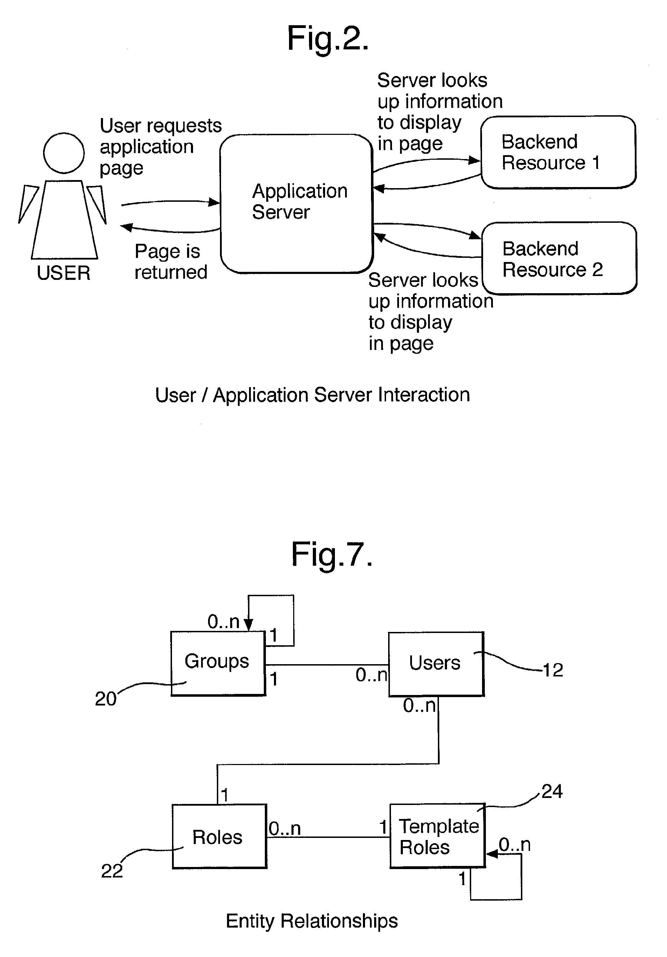

Application security deals with how the applications enforce security within themselves. This is particularly relevant in n-tier systems (particularly web based systems) because the web server / application server acts as a proxy between users and back end resources (as shown in Figure 2).

As far as the user or member is concerned, the only interaction the user has with the application is through the application server. Any further interaction is mediated by the applications running on the application server to the required resource. This is good from the perspective of ensuring that the user only gets to see one system where in fact there are many. The problem is that the backend resources have no direct knowledge of the user. They have to believe what the application tells them. In normal deployment scenarios, the application server has one user and password to connect to things like databases with. This id has enough permissions within the database to carry out the actions for all users. This means that the application server is potentially a point at which attacks can be carried out on the other components in the system. This problem can be described as the *Confused Proxy* problem since it can be possible to send data through to the application server and get it to perform an action that a user might not be able to do. The upshot of all this is that the code within the application server has to be aware of three things when it is processing any action
1. Who is performing the action
2. What action are they performing
3. What are they performing the action on.

The present invention is particularly concerned with system security.

In order to implement the security structure 14, a particular structure is used for the workings of directory servers and LDAP (Lightweight Directory Access Protocol). LDAP is a protocol developed as a mechanism for accessing information which is organised within hierarchical directories. Any item within this tree can be located by knowing its distinguished name (DN). The tree is organised underneath an initial suffix. The components of the DN list where it exists within the hierarchy.

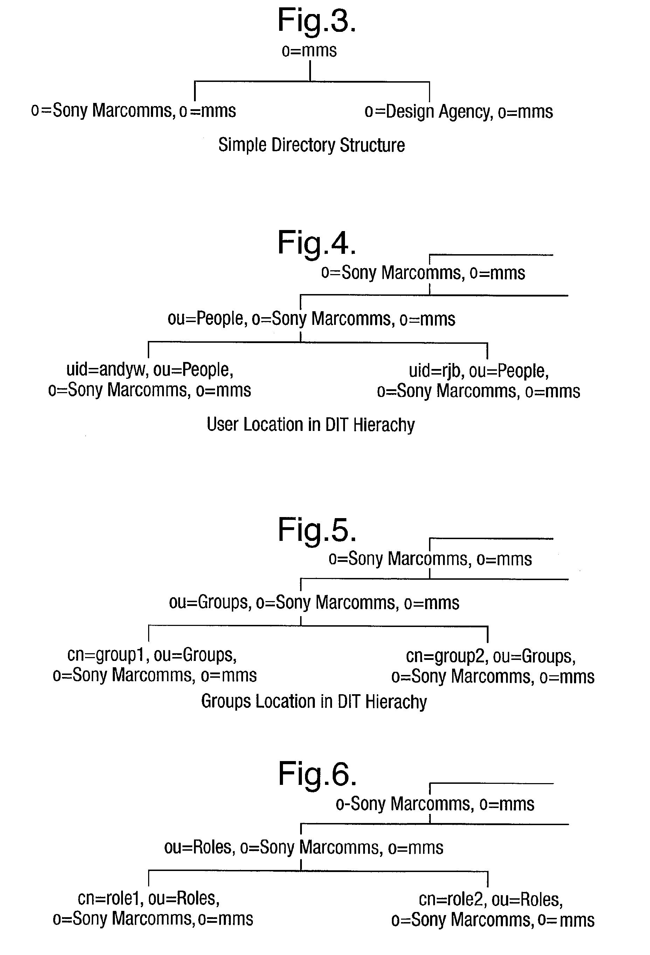

Figure 3 shows a tree with three entries in it. The suffix DN of the tree is *o=mms.* The other entries correspond to organisations stored within MMS and their DNs are *o=Sony Marcomms,o=mms* and *o=Design Agency,o=mms* respectively. It is worth noting that a DN is a combination of a new attribute value pair along with the DN of its parent leaf. Therefore if it was required to add a new organisational unit for people underneath *o=Sony Marcomms, o=mms* then the DN might be *ou =People, o =Sony Marcomms,o=mms.* The data is stored against each DN in the tree and the fields that can be represented are governed by the directory schema.

The LDAP protocol itself is very simple and designed at efficient access to entries rather than being able to provide an expressive and functional query interface to it.
LDAP includes 7 operations: ADD, MODIFY, DELETE, MODRDN, BIND, UNBIND and REBIND.

The structure of the hierarchy that is stored in the Directory Server for MMS is key to understanding how the data is organised and how the mappings required to define security can be achieved. Within the MMS Directory Server the base suffix for all user information is *o=mms*. The hierarchy below this is then designed to reflect the needs of the application.

The first hierarchical grouping is that of the organisations that are subscribed to MMS. These organisations and the associated roles, groups and members (to be explained below) are separate from each other and this needs to be reflected in the structure of the tree. The example given in Figure 3 shows a tree with two organisations within it. The entries for those organisations would be attached below the organisation within the DIT (Directory Information Tree). The organisation also includes a list of other organisations that this one can be visible to. Visibility of organisations is an important feature and will be mentioned below.

An organisation 8 has a number (zero of more) users/members 12 within it. These users/members are grouped under the member branch of the organisation and are stored by uid attribute (user id). This is shown in Figure 4.

An organisation 8 also contains a number of groups which are used to collect users/members 12 together for the purposes of administration and also some of the access permissions for assets. These groups are stored under the groups branch of the organisations by the cn attribute (common name). This is shown in Figure 5.

The groups themselves consist of members which can in themselves be groups. Each member is a distinguished name which either references a user or another group.

An organisation 8 also contains a number of roles which are used to decide the functional permissions of users/members within the organisations 8. Each role contains a list of members and the global of role that it references. The role information for MMS is stored globally within a template section of the DIT. The template section includes a plurality of templates, each defining a particular collection of functions such as read, write, edit etc. Templates may also be provided for defining only one respective function.

A role created for an organisation 8 references a single template within the template section of the DIT. This in turn may reference further templates within the template area. The roles for an organisation are found under the roles branch in the DIT as shown in Figure 6.

For roles within the system to work, there needs to be a global master list of them which is referenced by different organisations. This information is stored under the *ou=Roles, cn=Globals, o=mms* part of the DIT. The template information includes the default information for organisations and roles which are referenced throughout the tree.

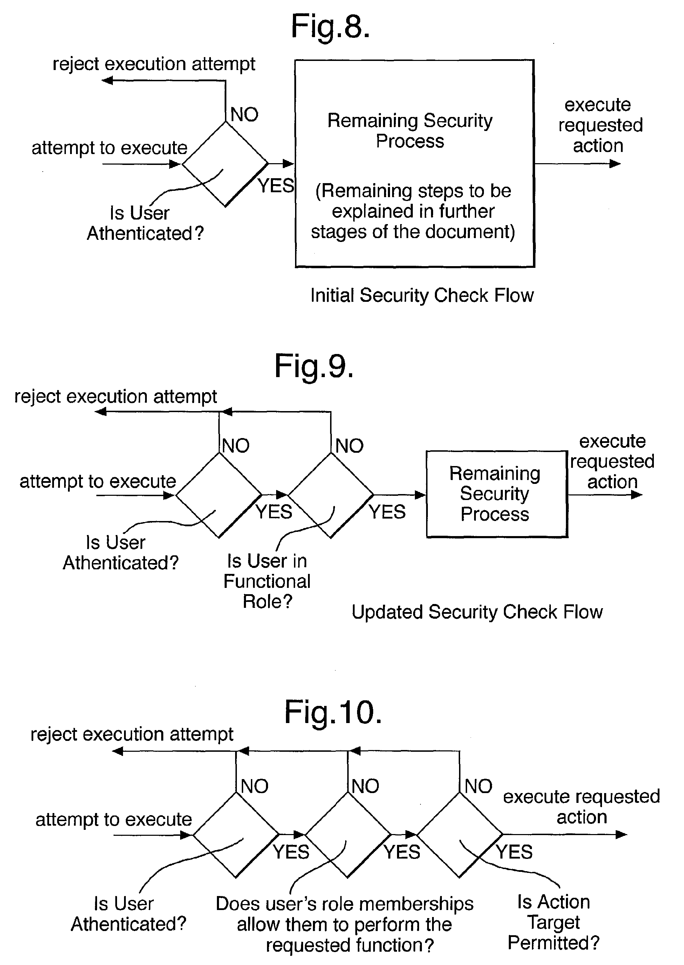

The relationships between groups and roles in terms of what relates to what are shown in Figure 7.

To summarise Figure 7, one group 20 contains zero or more members 12 and zero or more groups 20, one role 22 contains zero or more members 12 and references one and one templates 24 and one template is referenced by zero or more roles 22 and references zero or more templates 24. By implication a member 12 can be a member of zero or more groups 20 and roles 22.

Given the structure of the directory server and the data stored it is necessary to define the process by which a user's group memberships can be obtained. This process needs to cater for the flexibility of the DIT yet allow for the possibilities of optimisation at a later date. This optimisation would have to be achieved by caching results. This process is carried out as described below.
- *Obtain user DN*
   The Distinguished Name of the user or member 12 needs to be available to begin this operation. This can be obtained using the user's uid attribute (since this is unique within the directory) using the following LDAP filter.
   (uid=userid)
- *List the groups the user directly belongs to*
   Using the DN of the user 12 whose membership you wish to find out use the following LDAP filter to obtain the list of groups 20 the user 12 is directly a member of.
   (&(objectclass=mmsGroup)(|(uniquemember=userDN)(mmsAdminist rator=userDN)(mmsOwner=userDN)))
- *Traverse the groups to find the full list*
   For each group 20 dn reference within the uniquemember field within the group 20 obtain the groups 20 that it is a member of (this operation is recursive). The current list of groups 20 a user 12 is a member of needs to be stored within a set in order to check for circular references. Use the following LDAP filter to check for the groups 20 a group 20 belongs to
   (&(obj ectclass=mmsGroup)(uniquemember=groupDN)).

The following describes the process for obtaining a list of roles 22 that a user 12 is capable of performing. This process would need to be optimised by caching of results in a high throughput environment. The process is carried out as described below.

### Obtain user DN

- The Distinguished Name of the user 12 needs to be available to begin this operation. This can be obtained using the user's uid attribute ( which is unique) using the following LDAP filter
   (uid=userid)

### List the roles the user belongs to

- The next stage is to list the roles 22 that the user 12 is assigned to within their organisation 8. This is done by using the following LDAP filter.
   (&(objectclass=mmsRole)(uniquemember=userDN))

### Traverse the template roles to create the final list

- Once the list of roles 22 within an organisation 8 is known then each of these needs to be mapped (via the template information) to a final list of allowed roles 22 and the functions defined by the reference templates 24. For each retrieved role 22 for an organisation 8 a lookup must be done to obtain the subroles incorporated within it. This is a recursive operation to traverse the role hierarchy which can be performed by loading up the attributes for each role 22 and using the uniquemember attribute in order to find the subroles.

The media management system provides a database 2 accessible from external organisations 8, each organisation 8 having one or more members 12. The members 12, therefore, are users 12 of the system.

When a user 12 first attempts to execute a function on the system, the security structure 14 attempts to authenticate the user 12.

To be able to satisfy the requirements of authentication the security structure supports two things
1. The ability to authenticate a set of credentials
   For a user 12 to be authenticated then they must supply a set of credentials to the system. One of these credentials is always the user's identity (which corresponds to their userid). The second requirement is for the user to also supply a token which can be validated, such as a password. MMS can then take these credentials and compare them against those stored centrally within the Directory Server to determine whether to authenticate a user 12.
2. The ability to be aware of the current credentials at any given time
   Once a user is authenticated, the system calls on that information at any time during execution. That means that at a given point in the flow of control of the application, it is possible to obtain the identity of the currently authenticated user 12.

Once a user 12 is authenticated within the system, the first of the three requirements for authorisation is met in that the originator of an action or function is known to the application. It also means that the security structure 14 can also use this information to be able to audit who has performed actions within the MMS system.

In terms of the decision making flow of the security structure, this gives the first step in the chain as shown in Figure 8.

Functional Access Requirements define the requirements within MMS to restrict access to functionality within the system. The method for restricting access to the functions within MMS is via the roles 22. As mentioned above, the roles 22 define functions which can be carried out within MMS. At its simplest level, a role 22 is a mapping of functionality against allowed users 12. Therefore, a role 22 has references to all the users 12 which are allowed to use it. In addition to this it also needs to be possible to group roles 22 to form functional blocks (much in the same way of having groups of groups).

Within the scope of MMS, two pieces of information are provided to be able to grant authorisation for a user 12 to carry out an action. The user 12 must be authenticated with MMS (as described above) and the user 12 must be a member of the role 22 which they are attempting to execute. The roles 22 themselves are fixed by MMS (it is not possible to define new roles) based on the requirements of the system. There needs to be a central source for the definition of roles 22 and groups of roles 22. Organisations 8 can draw from this as they need to. This will allow different organisations to be limited as to the functionality they can use within MMS. It also means that it is possible to easily add and remove functionality from MMS by changing the central references.

In terms of user interaction, the role membership model gives developers the ability to present an interface to users 12 based upon the functions that they have permission to execute, for example, only Ingestors will see the Ingest tab.

Following from the flow diagram which details the decision making flow that needs to happen in order to determine whether a user is allowed to perform an action this gives us an update diagram as shown in Figure 9

Figure 9 shows the first two steps in checking whether an operation or function can be permitted. The function itself it not necessarily that important (though the target of it is). To be able use this model it is important that the end users 12 of the system are presented with an interface which allows the assignment and delegation of roles 22 to be managed. The best way to express this functionality is in terms of use cases and actor definitions. The use cases here overlap slightly with those defined for asset management but this is the prime source for allocating roles 22 within the system.

### Perform Operation / Role

This action is where a user 12 attempts to execute an action within MMS. This is a generic use case for any kind of action within MMS. Authorisation for this is given based upon whether the user 12 is a member of the appropriate role 22 and also whether the data that the action is being carried out on is something they have permissions to. This is described below with reference to Figure 10.

### Create Role

This action is where a new role 22 is created. This is an administrative function. The information required for this action is the role details of the role to create. The role 22 is created outside the scope of organisations 8 and used as a template for those organisations to be able to use this role.

### Remove Role

This action is where an existing role 22 is removed. The role 22 is removed along with all references to it within MMS. This effectively removes the role from everyone. This is an administrative function.

### Grant Role

This action gives a user 12 within an organisation 8 membership of a Role 22. The required information for this action is a reference to the user 8 and the role 22 they are to be granted permission to. This grant can take the form of simple membership and also that of role administrator. Authorisation for this action is given based upon whether the user is a *User* Administrator or Organisation *Administrator*.

### Add Role to Role

This action is used to group roles 22 within roles 22. It allows a Role 22 to be added to another one. This allows the creation of role packages to group functions and provide easier administration for application security. The input for this action is a reference to the role being added and a reference of the role to which it is being added. This is an administrative operation.

### Remove Role from Role

This action is used to ungroup a role 22 from another one. It is the inverse function of above. This input for this action is a reference to the role to be removed and a reference to the role it is to be removed from. This is an administrative operation outside the application context.

### Revoke Role

This action removes a user's permissions from a role. It can be used to remove both role membership and also role administration privileges. The input for this action is a reference to a role and a reference to the user to be removed from it. This action is only available to users who are a *User Administrator, Organisation Administrator.*

### Allocate Role to Organisation

This action is used to allow a role 22 (or collection of roles) to an organisation 8. It is used so that different organisations 8 can be presented with differing functionality. The input for this action is a reference to the role to allocate and a reference to the organisation to allocate it to. This is an administrative action.

### Revoke Role from Organisation

This action is used to remove a role 22 (or collection of roles) from an organisation 8. The input for this action is a reference to the role to remove and a reference to the organisation from which to remove it from. This action is an administrative operation.

As explained above, the flow of security by the security structure 14 is built from the initial requirements for a user 8 to be authenticated through to working out whether they have permission to execute a function or role within MMS. There is one more thing that the security structure 14 needs in order to be able to grant access to a particular action or function and that is to understand the resource that the action is targeting. Taking this requirement gives us a final decision flow for the security structure as shown in Figure 10.

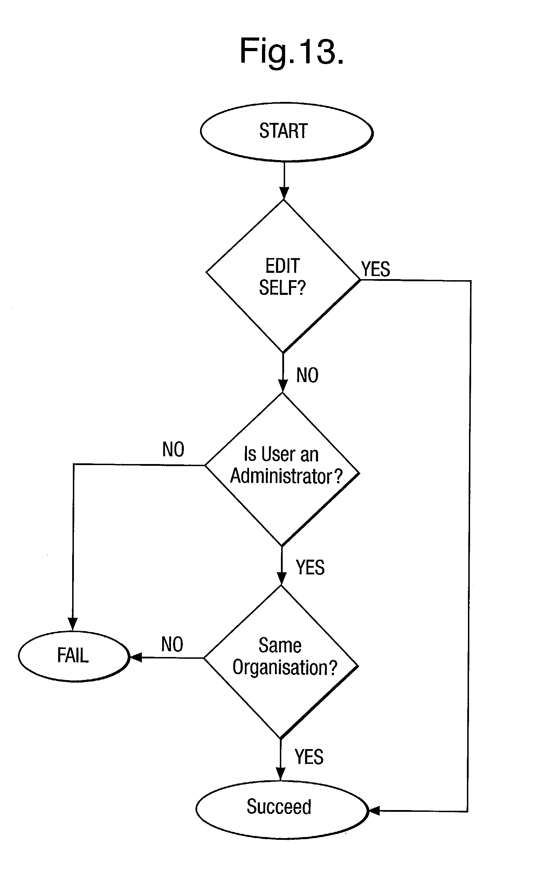

As part of this step, the security structure 14 determines whether or not the user 12 is listed for the target in question as having permission to conduct the requested function. In the case of actions or functions on data files 6 themselves, the data files 6 have associated with them details of users 12 and what functions, such as read, write, edit etc. they are permitted to perform. Similarly, where the target is data regarding a user 12, the action will only be allowed if the user 12 is acting upon his/her own data or if the user 12 has administrative rights for the organisation 8 in question. Figure 13 illustrates a flow diagram for a user attempting to change a password.

The security structure includes mechanisms for storing permissions against the data and folders. These permissions are based upon either users 12 themselves or whether the users 12 are members of groups 20 who have been allocated those permissions.

Permissions can also be specified at an asset metadata level.

It is proposed to provide a permission hierarchy which will allow a user 12 to grant other users 12 permission to edit. The following table indicates how this is configurable by specifying a flattened list of permissions to be granted/revoked in LDAP:

| **OPERATION** | **PERMISSION** | **INCLUDE** |
|---|---|---|
| Grant | View | |
| Revoke | View | Edit, Delete, View Access, Grant Access, Revoke Access |
| Grant | Edit | View |
| Revoke | Edit | |
| Grant | Delete | View |
| Revoke | Delete | |
| Grant | View Access | View |
| Revoke | View Access | Grant Access, Revoke Access |
| Grant | Grant Access | View, View Access |
| Revoke | Grant Access | |
| Grant | Revoke Access | View, View Access |
| Revoke | Revoke Access | |

Grants are processed before Revokes to ensure consistency. For example, Grant Delete and Revoke View are processed in this order to ensure that they 'cancel each other out'.

In terms of user interaction, the permissions model gives the developers of the user interface the ability to present an interface to users based upon the asset and metadata permissions. For example, input fields and buttons may be disabled on the Dublin Core metadata screen if the User does not have Edit permission on the asset.

An asset will have an owning organisation 8 and owner. The owner is likely to be the user who created the asset / folder, although this ownership can change with time (e.g. the original owner leaves the company). The owning organisation is likely to be the organisation of the owner, however, it is possible to create an asset on behalf of another organisation.

Proxy assets have the same organisation as their master. This rule is enforced when:
- proxy is ingested
- owning organisation is changed on master

Similarly, 'new version' assets have the same organisation as their 'previous version'. This rule is enforced when:
- version is ingested

The best way to understand the requirements for asset control is to look at use cases associated with assets within MMS and the kinds of roles that are associated with assets and asset management.

The use cases are the actions that can be performed which are relevant to the management of folders and assets within MMS.

### Create Root Folder

This action is the ability to create a user or group folder.

### Create Sub Folder

This action is the ability to create a folder within a folder.

### Edit Folder

This action is the ability to edit a folder, e.g. change the effective dates.

### Set Folder Owner

This action is the ability to change a folder's owner or owning organisation.

### Remove Folder

This action is the ability to remove a folder and any container relationships it is participating in (as a parent and/or sub folder). Soft or hard deletion is available (configurable using LDAP). A soft delete end dates the folder so that is no longer effective, whereas a hard delete removes the record.

### View Access to Folder

This action is the ability to view the access permissions on a folder.

### Grant Access to Folder

This action is the ability to grant access to a folder.

### Revoke Access to Folder

This action is the ability to revoke access to a folder.

### Edit Folder Dublin Core Metadata

This action is the ability to edit a folder's Dublin Core metadata.

### Add Folder User Defined Metadata

This action is the ability to add user defined metadata to a folder.

### Edit Folder User Defined Metadata

This action is the ability to edit a folder's user defined metadata.

### Remove Folder User Defined Metadata

This action is the ability to remove a folder's user defined metadata.

### View Access to Folder User Defined Metadata

This action is the ability to view the access permissions on a folder's user defined metadata.

### Grant Access to'Folder User Defined Metadata

This action is the ability to grant access to a folder's user defined metadata.

### Revoke Access to Folder User Defined Metadata

This action is the ability to revoke access to a folder's user defined metadata.

### Create Link

This action is the ability to create a container relationship between a folder and another folder/asset.

### Remove Link

This action is the ability to remove a container relationship between a folder and another folder/asset. Soft or hard deletion is available (configurable using LDAP). A soft delete end dates the link so that.is no longer effective, whereas a hard delete removes the record.

### Ingest Asset

This is the ability to ingest/create an asset.

### Ingest Proxy

This is the ability to ingest/create an asset which is a proxy for another asset. Proxies should be read only, i.e. Edit permission on the proxy is not allowed. If it is granted by the user, the MMS system will fail silently in the business tier.

### Ingest Version

This is the ability to ingest/create an asset which is a new version of an existing asset. The existing asset is end dated so that it is no longer effective. The new version is placed in the folder(s) that the existing asset is in.

### Edit Asset

This action is the ability to edit an asset, e.g. change the effective dates.

### Set Asset Owner

This action is the ability to change an asset's owner or owning organisation.

### Remove Asset

This action is the ability to remove an asset and any relationships it is participating in. Soft or hard deletion is available (configurable using LDAP). A soft delete end dates the asset so that is no longer effective, whereas a hard delete removes the record.

### View Access to Asset

This action is the ability to view the access permissions on an asset.

### Grant Access to Asset

This action is the ability to grant access to an asset.

### Revoke Access to Asset

This action is the ability to revoke access to an asset.

### Edit Asset Dublin Core Metadata

This action is the ability to edit an asset's Dublin Core metadata.

### Edit Asset Format Metadata

This action is the ability to edit an asset's format metadata. This action would only be performed if the asset's format metadata is re-extracted, e.g. a new format metadata extractor is made available.

### Add Asset User Defined Metadata

This action is the ability to add user defined metadata to an asset.

### Edit Asset User Defined Metadata

This action is the ability to edit an asset's user defined metadata.

### Remove Asset User Defined Metadata

This action is the ability to remove an asset's user defined metadata.

### View Access to Asset User Defined Metadata

This action is the ability to view the access permissions on an asset's user defined metadata.

### Grant Access to Asset User Defined Metadata

This action is the ability to grant access to an asset's user defined metadata.

### Revoke Access to Asset User Defined Metadata

This action is the ability to revoke access to an asset's user defined metadata.

### Create Proxy Relationship

This action is the ability to create a proxy relationship between two assets. Proxies should be read only, therefore all Edit permissions on the proxy will be removed.

### Remove Proxy Relationship

This action is the ability to remove a proxy relationship between two assets.

### Create Group

Any authenticated user has the ability to create a group within MMS. This group is created within the scope of their organisation and the user is automatically installed as the owner of the group. This group can then be used to hold a collection of other groups and users and can then be used to restrict permission to assets within MMS. The input to this action is the name of the group to be created.

### Delete Group

Deleting a group is removing it from the system. It removes the group and also any references to it that existed from elsewhere. (note that if there are references to the group then a warning message should be displayed). The input to this action is a reference to the group. Authorisation for this action is granted based upon whether the user is either a *Group Owner, Organisation.Administrator* or *MMS Administrator.*

### Grant Membership to Group

This is the action which a user grants another entity (user or group) membership within a group. The input to this action is the group to grant membership to and the reference to the user/group to be added to it. Authorisation for this action is granted based upon whether the user is either a *Group Owner, Group Administrator, Domain Administrator* or *MMSAdministrator.*

### Revoke Membership from Group

This is the action to remove an entity (user or group) from a group. The input to this action is a reference to the group and a reference to the entity to remove from it. Authorisation to this action is granted based on whether the user is either a Group *Owner, Group Administrator, Domain Administrator* or *MMS Administrator.* Membership cannot be revoked for a *Group Owner.*

This section defines the terms that are used in this document. The reason for this is that providing a role based security architecture within an ASP (Application Service Provider) environment is a complex operation.

Bearing in mind that the security structure 14 now has a requirement to be able to understand what a given action is operating on, the next stage defines a means of expressing targets within MMS. This has been discussed above with reference to Figure 3 to 6. The method of expression needs is generic enough that the security manager only needs to know where to ask to find out whether the request is allowed rather than knowing about all possible targets. This is the same as knowing how to interpret the rules for roles without being aware of all the roles which exist. Therefore the framework is neutral of the resource in question and provides the basis for accessing things like assets and folders within the database whilst also being able to handle lookups against roles 22, users 12 and organisations 8 within the directory server.

The last aspect of targeting shown in Figure 10 is the visibility that resources and information within MMS has. Any organisation 8 needs to be able specify the organisations 8 that they are prepared to collaborate with. This relationship needs to be explicit. This needs to be one of the first checks within the "Is Action Target Permitted" part of the flow. Therefore any resource, such as a data library 4 or data file 6, needs to be owned by an organisation 8 and any access mediated by the organisational preferences of the owning organisation.

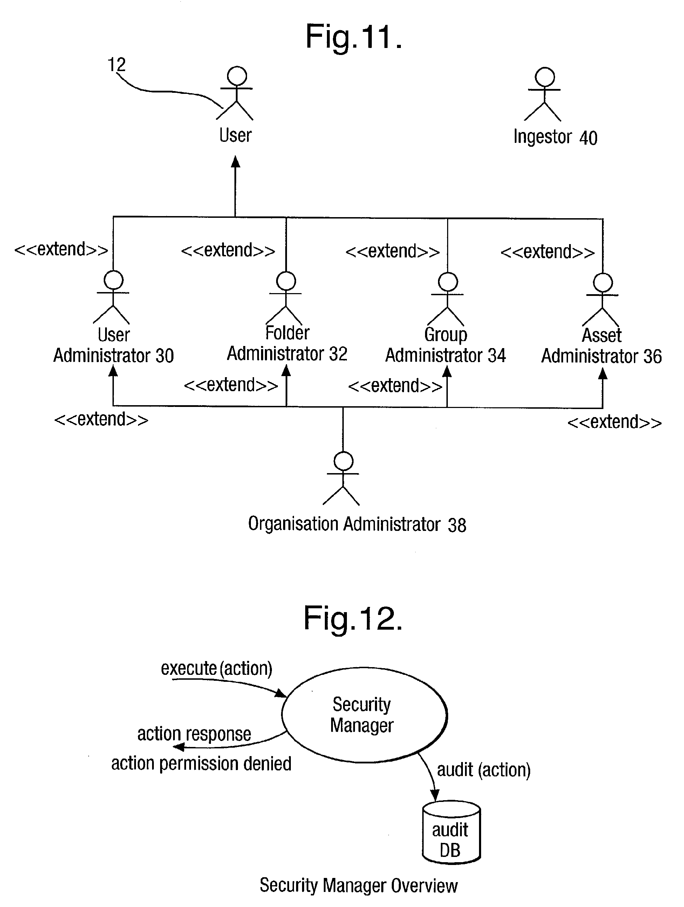

In running the MMS, various operators or actors are allowed different levels of control according to their duties as part of the MMS. Figure 11 illustrates the various actors who are involved in within MMS.

The User 12 is the basic unit within MMS, A User 12 is capable of performing most actions within the system aside from ingesting new assets. Users can modify their own data and data they have access to, create and control groups 20 and search for /download assets. The access a user 12 has to the system is dependent on the organisation 8 and groups 20 that they belong to.

A User Administrator 30 is allowed to do anything that a User 12 can do and has additional capabilities with regards to the creation and management of users 12 within MMS. A User Administrator 30 can control the roles 22, password and personal details of users 12 within the same organisation 8 as themselves. They can also create new users 12 within their organisation.

A Folder Administrator 32 is allowed to do anything that a User 12 can do with the additional capabilities with regards to the management of folders, i.e. collections of data files 6. A Folder Administrator 32 can manage any of the folders within the scope of their organisation 8. This includes creation, deletion and permissions.

A Group Administrator 34 is allowed to do anything that a User 12 can do with additional capabilities pertaining to the management of groups. A Group Administrator 34 can manage any groups that exist within the scope of their own organisation 8.

An Asset Administrator 36 is allowed to do anything that a User 12 can do with additional responsibilities and capabilities with regards to Assets. An Asset Administrator has administration privileges over any assets owned by their organisation and also the ability to ingest new assets.

An Organisation Administrator 38 has administrative privilege over everything that falls within the scope of their own organisation 8.

The Ingestor 40 is a special role which is used for people who have the ability to introduce new assets into the system but do not have the ability to search and view existing assets. This duty would be assigned to someone who was given the job of bulk ingesting new assets or this duty can be added to users 12 to give them the additional privilege of ingesting file.

The MMS may also include an auditing feature.

In terms of security there are two ways of using the term Auditing. These are the ability to audit the security of an application or system and the ability to audit what has happened within an application. Both of these abilities are important. To understand these requirements it is important to understand how security is controlled within the context of the MMS.

As illustrated in Figure 12, the basic flow of the security structure 14 within an application is that an action is passed to it in order to be executed. As discussed above, the security structure then makes a decision on whether or not to execute the action based on the permissions of the user 12 attempting to execute the action, their roles and what they are attempting to perform the action on. At this point the structure logs the action that was attempted and whether it was allowed or denied. It can then attempt to execute the action and return any response to the caller or inform the caller that they had insufficient permission to carry out the requested action.

Before releasing an application, the security of it is tested. Web applications present interesting challenges in this direction because the HTTP protocol is stateless. Therefore it is possible to request a page without necessarily having gone to the immediately preceding page. Once the user 12 has an authenticated session they can (in theory) trigger any action within the system. Therefore there needs to be a thorough review and test process in order to ensure that the security structure 14 functions properly in restricting access within the application. From this perspective it is very important that the structure has as few points of entry as possible (in this case one) in order that there is only one interface which needs to be exercised in order to perform this checking.

Once the application is running, users 12 are able to access functionality with differing levels of permissions. It is important to be able to record who has done what within the system and when so that it is possible to track back possible problems within the system. It is important that all actions within the application get logged at the granularity of actions. It is possible to use software to analyse web server logs and get to very close to this functionality. The problem here is that the user 12 who requested the action is not necessarily going to be captured and also that the parameters and details of the action might not also be captured. Therefore all actions that occur within the system are logged. Being able to do this allows the following things

### Support Desk

Any technical support function will (at some stage) need to know what actions the user 12 has been attempting in order to assist them with their problems. It is better from a helpdesk point of view to have both perspectives on what the user is up to so that they can obtain from the user what the user thought they were doing as well as from the system what it thought they were doing. It also gives a very good feedback path to areas of inconsistency within the user interface of the system

### Accountability

If something appears in the audit database then the chances are that that user performed (or tried) that action. This is useful in support situations for organisations who are claiming application error in order to cover over user error when talking to technical support. It may also be important for the MMS provider from a legal standpoint in an ASP environment where companies can potentially share each others' assets. In this situation two competing companies would not want each other to have visibility of their assets / company structure. In the situation where this access might be granted it is important for the MMS provider to be able to prove that this access was not granted by the application in error. In the case of the userid which allowed the access being compromised it still allows the MMS provider to be able to say that the security breach happened because a particular account was compromised.

### Verification of Security Compromises

In theory, a hacker could gain entry to the systems that MMS runs on and make changes to things outside the context of the application. The audit trail gives something to compare against to be able to judge the nature and scope of such changes.

### Recognising Possible Break-in Attempts

The audit database also logs attempts to access things that a user has not got access to. In the case of a perfect user interface this should not happen. In the real world it will happen but it should not happen that often. Being able to see the numbers of failed execute() actions it is possible to get a picture of possible break in attempts and attempted security breaches. For example a user account may be compromised and a hacker use it in order to attempt to trigger other actions by manipulating HTTP requests. This kind of activity would show up in an analysis of the logs which would allow the administrators of MMS to be able to say whether or not a user account needs to be monitored or locked.

For completion, the following are definitions of some of the terms used above.

### ASP (Application Service Provider)

An ASP is a provider of applications to multiple organisations. This means that this kind of application provides services to multiple collections of individuals. The implications are from an application perspective that a block of functionality is provided to each organisation, which is not necessarily the same. Further to this the application needs to be aware of both the identity of users and also the organisation to which they belong in order to understand their security requirements (this also impacts the visibility of data).

### Groups

In the scope of this document groups are the entities which are used in order to organise collections of users with respect to access to assets. Groups can be cross organisational in that a single group can contain members from multiple organisations. Groups can also be layered so it is possible to have groups of groups within the MMS framework.

### Roles

Roles are the mechanism for defining responsibilities and available functionality within MMS. Roles are the mechanism for grouping a user's functional capabilities. They exist within the scope of a single organisation rather than across multiple ones. The reason for this is to keep a very strong separation between roles and groups. Roles are stored globally for the whole of MMS and then referenced as required by each organisation so that different organisations can be given different functionality. The global roles can contain a list of roles that they include so it is possible to group roles into packages. At the organisation level, this grouping does not occur.

### Authentication

Authentication is the process of taking a set of credentials from an end user of MMS and validating it against a centrally held store. The end result is to be able to say with a reasonable degree of confidence that an authenticated user is who they say they are.

### Authorisation

Authorisation is the act of taking an authenticated user and deciding to allow them to perform an action or operation within MMS. Authorisation can only happen against authenticated users.

### Users

Users are individuals who are using the MMS application. A user belongs to a single organisation. A user can also belong to zero or more groups and be assigned to zero or more roles.

### Organisations

Organisations are the entities which use MMS to manage their digital assets. An organisation consists of a numbers of users, groups and roles.

### Assets

Assets are the digital media that are stored within MMS.

### Directory Server

A Directory Server is a component within the MMS system which stores a directory of all the users, groups, organisations and roles within MMS. This is the central repository from which decisions on security decisions are made.

### Application Server

An application server is a platform upon which the MMS application sits. It provides the underlying services (eg/ J2EE web and bean containers) that the application is built upon.

### Action

An action is a function/operation that is carried out within the MMS system by a user. This can also be referenced as an operation.

### Folder

Folders are the way items are grouped within MMS. MMS can be thought of as a virtual filesystem for media assets. Within this context, a folder is a container for a list of assets or other folders.

### Visibility

It is important to understand the concept of visibility in an ASP environment. Normally, no organisation would have any visibility of the others within the ASP. In the case of MMS, organisations are allowed visibility of each other and, indeed, need it in order to be able to collaborate and share media between organisations. By default an organisation (and all its associated resources) is not visible to any other within MMS. This visibility can be changed to allow inter organisation work to be carried out (the relationship is explicit rather than implied though).

## Claims

1. A data management system including:
a database for storing a plurality of data libraries; and
an interface for controlling storage of data in the data libraries of said database and allowing access to said data by a plurality of external organisations, each organisation including one or more respective members; wherein
the interface includes a security structure controlling access of the members of the organisations to the data.

2. A method of providing a plurality of external organisations with access to a common database containing a plurality of data libraries, each organisation including one or more respective members, the method including the steps of a security structure for controlling access of members of the organisations to the data.

3. A security structure for use with a database storing a plurality of data libraries, the security structure allowing an interface between different external organisations and data of the data libraries, each organisation having one or more respective members and the security structure controlling access of the members of different organisations to the data of the data.

4. A system, method or structure according to claim 1, 2 or 3, wherein the organisations operate respective data storage/communication systems and include an external connection to the database.

5. A system, method or structure according to claim 4, wherein the data storage/communication systems include respective administrator rights for the respective systems.

6. A system, method or structure according to any preceding claim wherein access of the members to the data includes at least reading, writing and editing of the data.

7. A system, method or structure according to any preceding claim wherein the data libraries have different respective ownerships.

8. A system, method or structure according to any preceding claim wherein one or more of the data libraries is owned by a respective organisation.

9. A system, method or structure according to any preceding claim wherein the security structure allows the members to request operation of functions with respect to the database, the functions including access to the data.

10. A system, method or structure according to claim 9 wherein, when a member of one of the organisations requests a function, security structure requires that the ID of the member be authenticated.

11. A system, method or structure according to claim 9 or 10, wherein the security structure includes a list of functions available to respective members of the organisations and, when a member of one of the organisations requests a function, the security structure requires that it be determined that the requested function is available to the member.

12. A system, method or structure according to claim 11 wherein the security structure includes, for each organisation, one or more roles, each role relating to one or more functions and defining the members of the organisation entitled to operate the one or more functions of the role.

13. A system, method or structure according to claim 12, wherein the security structure includes one or more templates, each template providing a list of one or more functions and the roles having pointers to the templates so as to indicate the one or more functions available to the members defined for the role.

14. A system, method or structure according to any one of claims 9 to 13, wherein the security structure includes, for each respective organisation, an indication of all others of the organisations to which said respective organisation is visible and, when a member of one of the organisations requests a function, the security structure requires that it be determined that the function does not require access to data of a data library owned by an organisation which is not visible to the organisation of the member.

15. A system, method or structure according to any one of claims 9 to 14, wherein the security structure provides for each target of a function to have associated with it one or more permissions, the permissions allowing defined functions to be operated by defined members and, when a member of one of the organisations requires a function, the security structure requires that it be determined that the requested function and said member be included in the permissions of the target of the function.

16. A system, method or structure according to any one of claims 9 to 15 wherein the security structure provides for each function to allow multiple targets.

17. A system, method or structure wherein data files of said data libraries have associated permissions, the permissions allowing defined functions to be operated upon respective data files by defined members and, when a member of one of the organisations requests a function on a data file, the security structure requires that it be determined that the requested function and said member are included in the permissions of the data file.

18. A computer program comprising program code means for performing all the steps of any one of the preceding claims when said program is run of a computer.

19. A computer program product comprising program code means stored on a computer readable medium for performing all the steps of any one of claims 1 to 17 when said program product is run on a computer.
